# EUROPEAN PATENT SPECIFICATION

(11) **EP 1 597 503 B1**
(45) Date of publication and mention of the grant of the patent: **07.02.2007**
(21) Application number: 04714691.5
(22) Date of filing: 26.02.2004
(51) Int. Cl.: F16K 31/34, F16K 31/18, E03D 1/33, E03D 1/34, F16K 31/28, E03D 1/35

(54) **METHOD AND APPARATUS FOR TRIGGERED DISCHARGE OF RESERVOIR**
VERFAHREN UND VORRICHTUNG ZUR AUSGELÖSTEN ENTLADUNG EINES SPEICHERS
PROCEDE ET APPAREIL PERMETTANT DE D CLENCHER UNE DECHARGE DE RESERVOIR

(30) Priority: 26.02.2003 AU 2003900848
(43) Date of publication of application: 23.11.2005
(73) Proprietor: Raubenheimer, Dennis Andrew, Frankston, VIC 3200 (AU)
(72) Inventor: Raubenheimer, Dennis Andrew, Frankston, VIC 3200 (AU)
(74) Representative: von Kirschbaum, Alexander
(86) International application number: PCT/AU2004/000244
(87) International publication number: WO 2004/076900

(56) References cited:
- WO-A-81/00270
- WO-A-99/54562
- WO-A1-99/14523
- WO-A1-99/54562
- DE-A1- 19 542 015
- FR-A- 2 533 898
- GB-A- 2 168 464
- GB-A- 2 358 257
- US-A- 4 359 065
- US-A- 5 442 820
- US-A- 5 533 545

## Description

### Technical Field

The present invention relates to an apparatus and method for causing the discharge of fluid from a reservoir such as a toilet cistern, and particularly relates to a trigger mechanism which may be actuated by application of a small force over a small distance.

### Background Art

A device and method for triggered actuation of a valve in a reservoir, comprising a first and a second float, the first float having restraining and releasing means, the second float triggering the releasing means of the first float, have been disclosed in document WO 99/54562.

Most toilet cisterns are discharged to flush a toilet by means of a button or lever, which, through a system of one or more levers internal to the cistern, raises a stop from a seat so as to open an outlet valve such that water in the cistern exits through the open outlet valve. The stop typically comprises a small float which causes the stop to remain raised throughout flushing so that the valve remains in the open position. Once most of the water has left the cistern, the float and the stop fall with the water level such that the stop falls back into the seat and re-seals the outlet valve. A ball float on the surface of the water in the cistern rises and falls as the water level changes, and controls an inlet valve thus causing water to flow into the cistern during and after flushing. Once the stop has fallen back into the valve and closed the outlet valve, the incoming water holds the stop in place such that the outlet valve remains closed. The cistern refills until the ball float rises sufficiently to close the inlet valve, at which point the flush cycle is complete and the cistern is ready for re-use.

Such flush actuation systems have a common design constraint in that the force applied to lift the stop from the seat and open the outlet valve must exceed the force applied by water pressure on the outlet valve. Designers of such systems must settle on a mechanism that requires an acceptable combination of force and distance of movement when operating the flush button or lever. Typically, such mechanisms require actuation by a force of up to around 8N (corresponding to application of 800 grams), over a distance of around 10 to 30 millimetres. In addition to the mechanical and design constraints faced by the need to accommodate an actuation force of up to 8N such restraints also cause potential difficulties for handicapped and elderly people or people with arthritic conditions that often find traditional cisterns difficult to operate.

For water conservation purposes many cisterns have a second flush activation system that, in addition to opening the outlet valve, also provides a means of limiting the amount of water that is released from the cistern, so as to provide a partial flush or "half flush".

Accordingly it would be highly desirable to provide a flushing system operable by way of minimal pressure. One object of this invention is to provide an improved method and apparatus for discharging of a reservoir.

### Summary of the Invention

A device for triggered discharge of a reservoir consists of :
a primary float for producing a primary float force to open an outlet valve of the reservoir; and
primary restraining means for releasably restraining the primary float force to prevent opening of the outlet valve, the primary restraining means having a triggerable release means whereby triggering of the triggerable release means releases the restraint of the primary float force.

The primary restraining means can take the form of a physical lock, the disactivation of the physical connections or a drive trigger.

A method of triggering discharge of a reservoir comprises the steps of:
producing a primary float force to open an outlet valve of the reservoir;
releasably restraining the primary float force to prevent opening of the outlet valve; and
triggering release of the restraint of the primary float force.

By providing the primary float force to open the outlet valve, the previously discussed design constraints of existing cistern systems are considerably eased. That is, in accordance with the present invention an actuation force to commence discharge need merely be sufficient to trigger the release means, such actuation force potentially being significantly less than the force required to lever open the outlet valve itself. Suitable design of the restraining means, release means and trigger action required to release the restraint of the primary float force may yield a reservoir discharge mechanism requiring an extremely low actuation force and actuation distance.

In embodiments of the invention in which release of the restraint of the primary float force is directly user actuated, it is possible that release of the restraint of the primary float force may occur during refilling of the reservoir. When the reservoir is in a partially refilled state the action of the primary float can place the mechanism into a self-stabilising state where the outlet flow will inevitably equal the inlet flow. This is caused because the mechanism will have failed to lift the valve past the point where the influence of the valve float is greater than the water pressure exerted on the valve diaphragm or stop. Accordingly, if the water level drops, the valve tends to close thereby arresting the fall of the water level. Alternatively, if the water level rises the valve opens thereby allowing more water through. In either case, the discharge from the reservoir may continue unchecked. Accordingly, preferred embodiments of the present invention provide means to prevent release of the restraint of the primary float force while the reservoir is in such a partially refilled state.

According to a first aspect the present invention provides a triggered reservoir discharging device, comprising:
a primary float for producing a primary float force to open an outlet valve of the reservoir;
primary restraining means for releasably restraining the primary float force to prevent opening of the outlet valve, the primary restraining means having a primary release means whereby triggering of the primary release means releases the restraint of the primary float force;
a secondary float for producing a secondary float force to trigger the primary release means; and
a secondary restraining means for releasably restraining the secondary float force to prevent triggering of the primary release means; the secondary restraining means having a secondary release means whereby triggering of the secondary release means releases the restraint of the secondary float force.

The secondary restraining means can take various forms including
1. A locking device activated by the water level, acting directly on the operator handle or connected components, or on the primary trigger, and which is only released when the water level is high enough.
2. An interface device that only connects the operator buttons or lever to the primary trigger when the water level is sufficient.
3. A secondary triggering device that propels the primary triggering device and will only operate when the water level is high enough.

According to a second aspect the present invention provides triggered reservoir discharging method, comprising:
producing a primary float force to open an outlet valve of the reservoir;
releasably restraining the primary float force to prevent opening of the outlet valve;
producing a secondary float force for triggering release of the restraint of the primary float force;
releasably restraining the secondary float force; and
triggering release of the restraint of the secondary float force.

In preferred embodiments of the first and second aspects of the present invention, the secondary float force is produced only when the reservoir content exceeds the partial level at which unchecked operation may occur. For example, the secondary float may be positioned proximal to a full level of the reservoir such that the secondary float force is not produced when the reservoir is empty or only partially full. Such embodiments allow for triggering of the release of the primary float force only when the reservoir is sufficiently full to produce a primary float force which will completely open the outlet valve, thus avoiding the circumstance of partial opening of the outlet valve and unchecked flow from the outlet valve.

In embodiments of any one of the first and second aspects of the invention, the primary float may be mounted on a primary lever arm for opening the outlet valve, such that the primary flotation force serves to lever open the outlet valve. In such embodiments, the primary restraining means may be provided by a primary leg, the primary leg comprising pivotally connected first and second primary leg portions, the first primary leg portion being braced to prevent axial movement of the primary leg and the second primary leg portion engaging the primary lever arm such that when the primary leg is in a straight position, the primary float force is restrained by the braced axis of the primary leg, and such that when the primary leg pivots off-axis, the primary float force is released. In such embodiments, the trigger to release the primary float force need merely cause such off-axis pivoting of the primary leg, with the primary float force then able to force further pivoting of the primary leg. Preferably the first and second primary leg portions are hinged in a manner to only allow movement of the first and second primary leg portions substantially within a nominal plane, and preferably in a manner to allow movement of the first and second primary leg portions only to a first side of the primary leg axis. A trigger to release restraint of the primary float force may then be applied from a side of the primary leg axis opposite the first side.

In embodiments of the invention comprising a primary leg for restraining the primary float force, the primary leg is preferably configured to re-straighten under gravity during discharge on the reservoir. For instance, while the primary float force urges flexion or bending of the primary leg prior to discharge of the reservoir, following discharge of the reservoir the primary float may act as a weight to urge extension or straightening of the primary leg. Alternatively, extension or straightening of the primary leg may be induced by the weight of the primary leg alone, or by the weight of the primary leg in conjunction with a dedicated weight. Once the primary leg is straightened during discharge, refilling of the reservoir will cause the primary float force to arise and to be restrained by the straight primary leg, such that the device is ready for another discharge cycle.

In embodiments of the first and second aspects of the invention, the secondary float may be mounted on a secondary lever arm, such that the secondary float force provides a lever action for triggering release of the restraint of the primary float force. In such embodiments, the secondary restraining means may be provided by a secondary leg, the secondary leg comprising pivotally connected first and second secondary leg portions, the first secondary leg portion being braced to prevent axial movement of the secondary leg and the second secondary leg portion engaging the secondary lever arm such that when the secondary leg is in a straight position, the secondary float force is restrained by the braced axis of the secondary leg, and such that when the secondary leg pivots off axis, the secondary float force is released. In such embodiments, the trigger to release the secondary float force need merely cause such off-axis pivoting of the secondary leg, with the secondary float force then able to force further pivoting of the secondary leg. Preferably the first and second secondary leg portions are hinged in a manner to only allow movement of the first and second secondary leg portions substantially within a nominal plane, and preferably in a manner to allow movement of the first and second secondary leg portions only to a first side of the secondary leg axis. A trigger to release restraint of the secondary float force may then be applied from a side of the secondary leg axis opposite the first side. Such embodiments preferably further comprise a user actuation means configured to cause such off-axis pivoting of the secondary leg.

In embodiments of the invention comprising a secondary leg for restraining the secondary float force, the secondary leg is preferably configured to re-straighten under gravity during discharge from the reservoir. For instance, while the secondary float force urges flexion or bending of the secondary leg prior to discharge of the reservoir, following discharge of the reservoir the secondary float may act as a weight to urge extension or straightening of the secondary leg. Alternatively, extension or straightening of the secondary leg may be induced by the weight of the secondary leg alone, or by the weight of the secondary leg in conjunction with a dedicated weight. Once the secondary leg is straightened during discharge, refilling of the reservoir will cause the secondary float force to arise and to be restrained by the straight secondary leg, such that the device is ready for another discharge cycle.

In embodiments of any one of the first or second aspects of the invention, means for providing a partial-flush mechanism are preferably provided. The partial flush mechanism may be provided by means to selectively apply the weight of the primary float to the outlet valve, such that when a level of the reservoir falls below the primary float, the primary float ceases to apply a float force to open the outlet valve and starts to apply a weight to close the outlet valve. In such embodiments, the full-flush mechanism is designed to prevent application of the weight of the primary float to the outlet valve, such that the primary float is free to fall with the water level, and such that the outlet valve closes only when the water level falls sufficiently that the outlet valve float falls to close the outlet valve. On the contrary, in such embodiments, the half-flush mechanism engages the means to selectively apply the weight of the primary float to the outlet valve.

The means to selectively apply the weight of the primary float to the outlet valve may comprise a sliding portion of the primary lever arm.

Any discussion of documents, acts, materials, devices, articles or the like which has been included in the present specification is solely for the purpose of providing a context for the present invention. It is not to be taken as an admission that any or all of these matters form part of the prior art base or were common general knowledge in the field relevant to the present invention as it existed before the priority date of each claim of this application.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

### Brief Description of the Drawings

FIG. 1 shows a general view of the invention applied to a typical cistern flush valve assembly.
FIG. 2 shows a plan view of the invention and the valve assembly.
FIG. 3 shows a side view of the invention and the valve assembly.
FIG. 4 shows a side view of the valve lift assembly and primary trigger mechanism in action, displaying its upward motion as the primary trigger collapses.
FIG. 5 shows the full-flush secondary trigger in action as its driving float rises and its pushrod advances to release the primary trigger.
FIG. 6 shows the partial-flush secondary trigger in action as its driving float rises and its pushrod both advances and the partial flush cut-off slide and releases the primary trigger.
FIG. 7 shows a rear view of the invention and flush valve assembly.

### Legend

- 1.: Vertical Valve Tube
- 2.: Circular Float
- 3.: Housing
- 4.: Attachment Protrusion
- 5.: Circular Rubber Diaphragm Valve
- 6.: Lift Arm
- 7.: Valve Lifting Float
- 8.: Shaft
- 9.: Lower Primary Leg Trigger Component
- 10.: Upper Primary Leg Trigger Component
- 11.: Shaft
- 12.: Shaft
- 13.: Shaft
- 14.: Weight
- 15.: Pivot
- 16.: Pivot
- 17.: Pivot
- 18.: jointed Upper Leg Secondary Trigger Component
- 19.: Jointed Lower Leg Secondary Trigger Component
- 20.: Weight
- 21.: Release Pad
- 22.: Float
- 23.: Pivot Shaft
- 24.: Lever
- 25.: Hinged Joint
- 26.: Pushrod
- 27.: Primary Trigger
- 28.: Pivot
- 29.: Pivot
- 30.: Pivot
- 31.: Jointed Component
- 32.: Jointed Component
- 33.: Release Pad
- 34.: Weight
- 35.: Lever
- 36.: Pivot Shaft
- 37.: Float
- 38.: Hinged Joint
- 39.: Pushrod
- 40.: Partial Flush Cut-Off Slide
- 41.: Enclosed Rails
- 42.: Structured Frame
- 43.: Rigid Post

### Detailed Description of the Invention

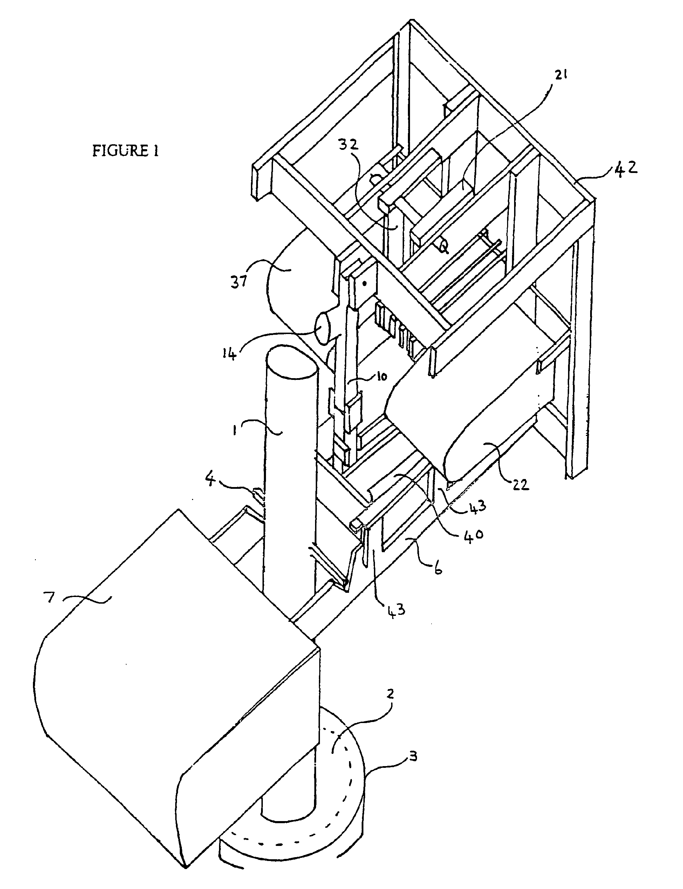

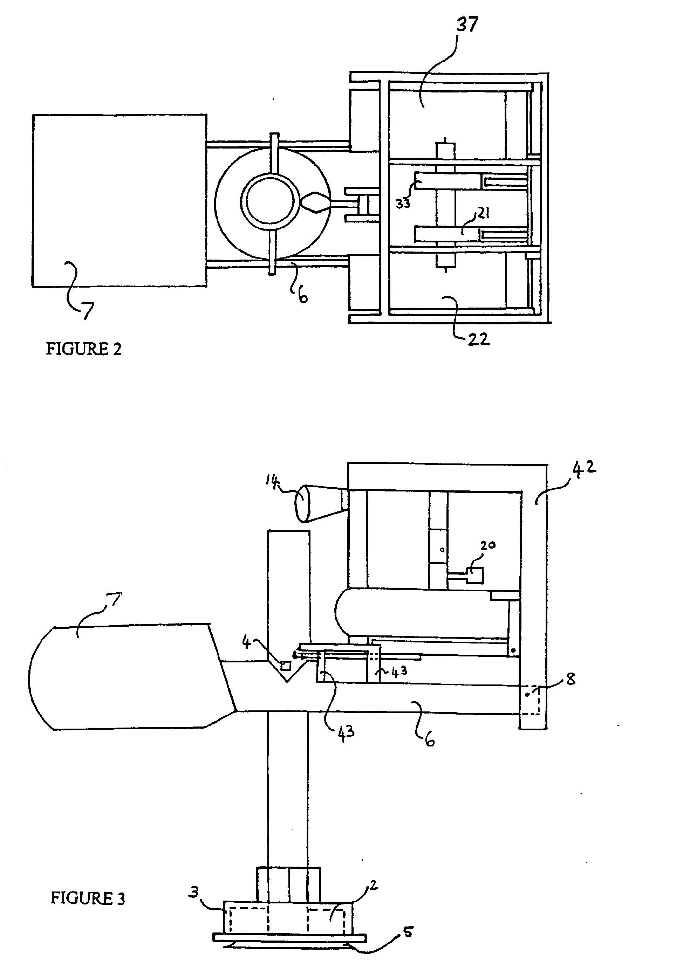

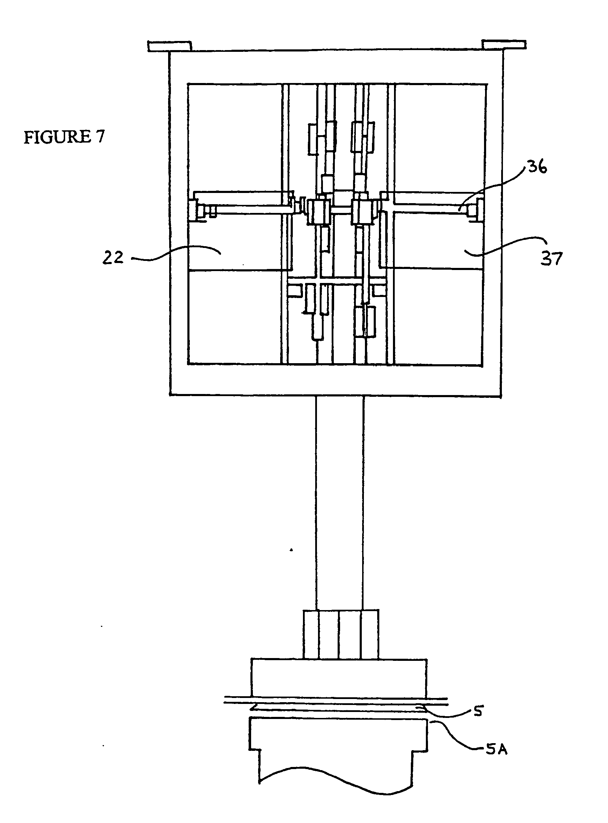

Referring firstly to figures 1 to 3 the construction and operation of a typical cistern flush valve, such as is used in the disclosed invention and many existing cisterns today will be described as these components are shared with the device of the invention. A typical flush valve assembly generally consists of the following:
1. A vertically mounted tube (1) that forms the core of a valve assembly and doubles as an overflow device.
2. A circular rubber diaphragm valve (5) of planar form attached horizontally at the lower end of the tube (1) with a central hole corresponding to that of the tube that allows overflow water to escape through the valve to the toilet bowl when the valve is in the closed position.
3. A valve seat, (5A FIG. 7) attached to the cistern floor, corresponding to the diaphragm valve (5) and through which water is allowed to pass rapidly to the toilet bowl or urinal when the valve (5) is raised from the seat.
4. A housing (3) that loosely carries the valve tube through a collar on its upper centre surface and is the means by which the valve assembly attaches to the cistern floor, allowing the valve tube to slide up and down to allow operation of the diaphragm valve (5).
5. A circular float (2) around the lower end of the tube (1) and within the housing (3) and above the diaphragm valve (5).
6. Some form of attachment or protrusion/s (4) by which the valve assembly is lifted. These may be at the top or at the sides of the valve tube. In this invention there are two protrusions at the sides of the valve tube.

This invention relates to improvements in devices for cistern-operated toilet and urinal flushing systems.

The combination of components (1-5) described above are hereafter referred to as the "flush valve", or "valve assembly". A mechanism normally links the release mechanism attachment points or protrusions (4) to the operator handle or button, and may take any of several forms. This is often a simple lever attached to operator handle. In the device described herein this mechanism forms the substance of the invention.

The principle of operation of this type of flush valve is that, when lifted to the open position such that water begins to evacuate the cistern, water pressure on the diaphragm valve is substantially relieved, allowing the upward buoyant force provided by the float (2) to become the dominant force, keeping the valve in the upper, open position until the water level has fallen below the level of the float (2). Once the water level is close to or below the float (2), the unsubmerged weight of the valve assembly and/or float will allow the valve to return under gravity to the closed position.

For water saving purposes, some cisterns may contain a second release mechanism, linked to a second operator button or lever, that will bring into play means by which the valve may be prematurely and automatically lowered to the closed position against the buoyant effects of the float (2). Such a mechanism allows the user to partially release the contents of the cistern. These systems generally function by means of a weight that acts on the valve assembly when the water level falls to a point such that it allows the weight to emerge above the water line, allowing its increased apparent weight to act downwardly on the valve assembly to force premature closure.

The invention described herein provides both partial and full flushing functions. Although it is shown applied to a valve as described above, variations may also be applied to other types of cistern valve, for example flap type valves or those that do not double as an overflow point.

In order to visualise and understand the complete cycle of operation of the device of the invention it should be borne in mind that toilet cisterns are refilled by an automatic inlet valve that operates whenever the water level falls.

A description of the device and its method of operation follows:

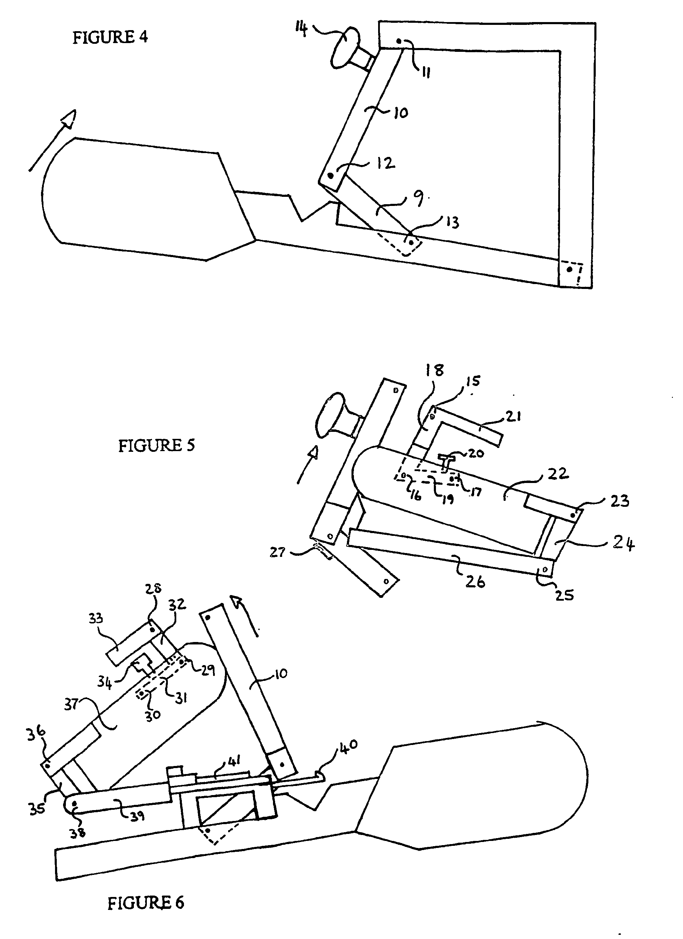

A rigid structural frame (42) has horizontal and vertical components that allow direct or indirect attachment of all parts of the device as described herein. In this embodiment of the invention the frame (42) allows the prototype device to be self-contained so that it may be removed in its entirety from the cistern. In this embodiment of the invention, lifting of the valve assembly is achieved by a hollow valve lifting float (7) rigidly attached at the end of an arm (6) consisting of rigid side components linked by rigid cross members, that is pivotally mounted by means of a shaft (8) to the vertical component of the structural frame (42). The arrangement of side components and cross members on the arm (6) allows the valve tube (1) to extend vertically through a pair of arms (6). Attached on each side component of the lift arm (6) parallel to and above the lift arm on rigid posts (43), are two enclosed rails (41). These enclosed rails retain the partial flush cut-off slide (40) in a manner which allows the partial flush cut-off slide to move longitudinally on the rails (41) a distance sufficient to allow the slide (40) to extend over the protrusions (4) on the valve tube. The action and purpose of the partial flush cut-off slide (40) shall be further described in the description of the partial-flush triggering mechanism. The combination of arm (6) and hollow float (7), partial flush cut-off slide (40) and enclosed rails (41) is hereafter referred to as the "valve lift assembly" or "lift assembly". The lift assembly is normally held in the lower position by a retention device that prevents the lift assembly from moving upward until triggered. The preferred retention and triggering device is a jointed assembly of upper (10) and lower (9) trigger components linked by a shaft (12), attached at the lower end by means of shaft (13) to the lift assembly and at the upper extremity to the horizontal component of the structural frame (42) by a shaft (11). The joint that is provided by shaft (12) between the upper and lower members is of form such that a stop allows movement in one direction but not in the other, such as could be compared to a human knee. This assembly hereafter referred to as the "primary trigger" is normally straight but collapses readily about the joint at shaft (12) when a pressure is applied in the direction in which it may fold. A crucial property of the primary trigger is that it is "locked" when extended, that is to say it resists end-to-end pressure as long as the hinge formed by shaft (12) is in the fully straightened position such that the two end pivots (11) and (13) are in direct opposition on a line passing through the central hinge shaft (12). The folding action of the primary trigger can be seen in FIG. 4, which illustrates how the lift assembly is allowed to move upward when the primary trigger collapses. Mounted on the lower trigger component of the primary trigger (9) towards its upper end is a primary trigger pad (27) whose purpose is to receive pressure from the full-flush secondary trigger pushrod (26). When a triggering force is applied to the primary trigger such that the hinge shaft (12) is pushed to the side of the line between pivots (12) and (13) and whilst under pressure from the buoyant force of the valve lift assembly, it folds rapidly, allowing the lift assembly to move rapidly upward and thus raise the valve assembly via the protrusions (4) on the valve tube, which extend over the side components of the lift arm (6). Once the water level has fallen below the level of the lift assembly, the lift assembly will return under influence of gravity or a suitable spring or other resilient means to the lower position, allowing the primary trigger to straighten. A brass weight (14), mounted on an arm extending at a right angle from the upper trigger component (10) near its upper end, assists this straightening procedure, ensuring that the primary trigger returns to and remains biased toward its extended and locked position.

The invention described thus far could be applied to a cistern with a simple means to apply pressure to and release the primary triggering mechanism. In this simple form, however, it would suffer the drawback that, if triggered when the water level is insufficient, the valve lift assembly would only partially raise the valve assembly, to a degree that does not allow the valve float (2) to overcome the downward influence of water pressure on the flush valve. In this undesirably balanced state the valve lift assembly maintains the valve in this partially raised position, so that water is continuously flowing from the flush valve as the cistern water inlet valve attempts to maintain the water level in the cistern. That is, the outlet flow through the partially open outlet valve is the same as the inlet flow such that the water level in the reservoir remains substantially constant and the outlet valve is neither raised to fully open the outlet valve nor lowered to close the outlet valve. Such embodiments of the invention may nevertheless be considered of use, for instance when implemented in conjunction with an indication to users that the device should not be actuated until refilling ceases.

However, to prevent the premature triggering described above, preferred embodiments of the present invention provide means by which operator action is prevented from releasing the primary trigger when the water level is too low. This may be achieved by various means, such as;
1. A locking device activated by the water level, acting directly on the operator handle or connected components, or on the primary trigger, and which is only released when the water level is high enough.
2. An interface device that only connects the operator buttons or lever to the primary trigger when the water level is sufficient.
3. A secondary triggering device that propels the primary triggering device and will only operate when the water level is high enough.

The preferred method is a secondary triggering device such as in 3 above, which operates on similar principles to the primary trigger, that is by means of collapsible, hinged elements driven by a buoyancy device. Such an assembly, referred to hereafter as the "full flush secondary trigger" may be seen in FIG. 5, which shows how a float (22) mounted to the vertical component of the structural frame (41) by pivot shaft (23) is employed to drive a secondary triggering mechanism primarily composed of jointed components (18) and (19) operating about pivots (15) and (17). A pushrod (26) attached via a lever (24) operating about hinged joint (25) acts on the primary trigger pad (27) to initiate the collapse of the primary trigger. The collapse of this secondary trigger mechanism is effected by light finger pressure or by means of a connecting mechanism linking the release pad (21) to a button or lever on the cistern lid or casing. The advantages of this preferred embodiment are that it further lightens the operator force required to release the flush mechanism and is more reliable and predictable than a catch or locking mechanism. The position of the driving float (22) being above that of the valve lifting device float (7) ensures that this secondary trigger will only operate when the water level is sufficient to fully activate the valve lifting mechanism. A brass weight (20) on an arm extending at a right-angle to the lower component (19) allows the full-flush secondary trigger to return readily to its locked position as the water level falls.

The preferred embodiment of the partial flush mechanism is the mechanism shown in FIG. 6, which is in all respects identical to that of the full-flush secondary trigger already described, except that its pushrod (39) acts on the partial flush trigger slide, (40) which in turn both applies pressure to the primary trigger and advances over the flush valve tube protrusions (4). The partial flush trigger slide (39) is of planar form in a "U" shape with the base of the "U" passing around one side of the primary trigger and the prongs of the "U" sliding within enclosed rails (41) that are attached via rigid posts (43) to each side component of the lift arm structure (6). The effect of this action is that when the lift device arm (6) returns to the horizontal position the extended prongs of the partial flush trigger slide bear down on the top sides of the flush valve tube protrusions (4) such that the valve assembly is driven downward against the effect of float (2) to close the flush valve prematurely. When the primary trigger jointed components (9) and (10) return to the straightened position the partial flush slide is pushed back to its original position by the lower trigger component (9) of the primary trigger, so that the partial flush trigger slide prongs retract from their position over the tube protrusions (4). Depending on design requirements the flush would normally be cut off when approximately half the water has been released from the cistern. A design consideration relating to premature closing of the flush valve is that the free-air weight of the lift device float must be greater than the buoyant force provided by the valve float (2).

Referring now to Fig. 7 a rear view of the device of the invention as fitted to a cistern is shown where the juxtaposition of the floats and the positioning of the circular rubber diaphragm valve is clearly shown.

In addition to the preferred embodiments detailed above the invention can also provide a hybrid version of the device of the invention where there is a direct mechanical link from external buttons or levers to the valve mechanism that allows manual or conventional flushing when the water level is too low to activate the secondary mechanism. The invention can incorporate the device of the current invention working in conjunction with conventional mechanicals such that when the slight movement of the button trigger as provided in the current invention, for whatever reason fails to activate flushing mechanism, further mechanical pressure can be applied by the user in order to activate the cistern mechanicals in the conventional manner. In this way the device of the invention can be incorporated as part of the mechanicals of a conventional cistern whereby micro-touch activation will occur at the first touch of a button in conjunction with conventional mechanicals that will be activated upon activation of further pressure if required.

Accordingly the limitations of current cisterns are overcome by the present invention, which provides a float driven device to do the work of lifting the valve. The resulting advantage is that the operator need only apply a force sufficient to trigger the lifting device. Such a triggering force may be as little as thirty grams, and require a movement of only one or two millimetres. This in turn brings the following advantages to the designer, manufacturer, and user;
- Flexibility in design allowing a variety of unique and attractive button and cistern options with tactile and visual appeal.
- Low cost and light construction of the linkage mechanism required between the flush buttons and the cistern flush mechanism.
- Hygienic operation in that only the smallest, rapid touch needs to be applied to flush the cistern, with, for example, a knuckle, tip of a fingernail, or the back of a hand.
- Significantly improved ease of use for the aged, small children and the disabled.

The invention provides for the first time a highly compact and refined mechanical improvement to the operation of standard flushing systems. In particular, the mechanicals of the invention provide for the activation of a cistern by way of an ultra-light "micro-touch" which can be effected using minimal pressure from the operators fingers or can be operated even with the touch of a pen or a set of keys. The provision of such a micro-touch mechanical facility allows a wide of range of design options not previously available for cisterns and importantly provides improved mechanisms and operator systems with far greater access and usability by handicapped or other physically impaired people. The micro-touch facility of the current invention provides the options of electronic control of the cistern flush which can be activated by way of a soleroid or other electronic componentry such that cistern activation can be by absolute touch panel control which in turn activates soleroid that then activates the mechanism of the invention. In this manner cistern flushing can be activated with virtually no pressure by way of touch buttons.

It will be appreciated by persons skilled in the art that numerous variations and/or modifications may be made to the invention as shown in the specific embodiments without departing from the scope of the invention as broadly described. The present embodiments are, therefore, to be considered in all respects as illustrative and not restrictive.

## Claims

1. A triggered reservoir discharging device, comprising:
a primary float (7) for producing a primary float force to open an outlet valve (2) of said reservoir; and
a primary restraining means (9, 10, 14) for releasably restraining said primary float force to prevent opening of said outlet valve, and a primary release means adapted to cooperate with said primary restraining means such that the triggering of said release means releases the restraint of the primary float force; and
a. second float (22) for producing a secondary float force to trigger said primary release means; and
a secondary restraining means (18, 19, 20) for releasably restraining said secondary float force to prevent triggering of said primary release means; and
a secondary release means adapted to cooperate with said secondary restraining means such that triggering of said secondary release means releases the restraint of said secondary float force thereby releasing the restraint of said primary float force and discharging said reservoir.

2. A device according to claim 1, wherein means is provided to produce said secondary float force only when the reservoir content exceeds the partial level at which unchecked operation may occur.

3. A device according to claim 1 or claim 2, wherein said primary restraining means is a primary leg comprising pivotally connected first and second primary leg portions with said first primary leg portion braced to prevent axial movement of said primary leg, such that when said primary leg is in a straight position said primary float is restrained by the braced axis of said primary leg, and such that when said primary leg pivots off-axis said primary float force is released.

4. A device according to claim 3, wherein said first and second primary leg portions are hinged in a manner to only allow movement of said first and second primary leg portions substantially within a nominal plane, and wherein said hinging allows movement of said first and second primary leg portion only to a first side of the primary leg axis.

5. A device according to any one of claims 1 to 4, wherein said primary restraining means is configured to re-straighten under gravity during discharge of said reservoir.

6. A device according to any one of claims 1 to 5, wherein said secondary restraining means is provided by a secondary leg comprising pivotally connected first and second secondary leg portions and said first secondary leg portion being braced to prevent axial movement of said secondary leg such that when the secondary leg is in a straight position said secondary float force is restrained by the braced axis of the secondary leg, and such that when said secondary leg pivots off-axis said secondary float force is released.

7. A device according to claim 6 wherein said first and second secondary leg portions are hinged in a manner to only allow movement of said first and second secondary leg portions substantially within a nominal plane, and wherein said hinging allows movement of said first and second leg portions only to a first side of said secondary leg axis.

8. A device according to any one of claims 1 to 7, wherein said secondary restraining means is configured to re-straighten under gravity during discharge of said reservoir.

9. A device according to any one of claims 1 to 8 including a partial flush mechanism to selectively apply a weight to said outlet valve.

10. A triggered reservoir discharging method, comprising the steps of:
(a) producing a primary float force to open an outlet valve of said reservoir;
(b) releasably restraining said primary float force to prevent opening of said outlet valve;
(c) producing a secondary float force for triggering release of said restraint of said primary force;
(d) releasably restraining said secondary float force; and
(e) triggering release of said restraint of said secondary force.

## Patentansprüche

1. Ausgelöste Reservoirentleerungsvorrichtung mit:
einem primären Schwimmer (7) zum Erzeugen einer primäen Schwimmerkraft zum Öffnen eines Auslassventils (2) des Reservoirs, und
einer primären Rückhalteeinrichtung (9, 10, 14) zum lösbaren Zurückhalten der primären Schwimmerkraft, um das Öffnen des Auslassventils zu verhindern, und einer primären Freigabeeinrichtung, die ausgebildet ist, um mit der primären Rückhalteeinrichtung derart zusammenzuwirken, dass das Auslösen der Freigabeeinrichtung das Zurückhalten der primären Schwimmerkraft aufhebt; und
einem sekundären Schwimmer (22) zum Bewirken einer sekundären Schwimmerkraft für das Auslosen der primären Freigabeeinrichtung; und
einer sekundären Rückhalteeinrichtung (18, 19, 20) zum lösbaren Zurückhalten der sekundären Schwimmerkraft, um das Auslösen der primären Freigabeeinrichtung zu verhindern; und
einer sekundären Freigabeeinrichtung, die ausgebildet ist, um mit der sekundären Rückhalteeinrichtung derart zusammenzuwirken, dass das Auslösen der sekundären Freigabeeinrichtung das Zurückhalten der sekundären Schwimmerkraft aufhebt, wodurch das Zurückhalten der primären Schwimmerkraft aufgehoben und das Reservoir entleert wird.

2. Vorrichtung nach Anspruch 1, bei der eine Einrichtung vorgesehen ist, um die sekundäre Schwimmerkraft nur dann zu erzeugen, wenn der Inhalt des Reservoirs den Teilpegel übersteigt, bei dem eine unkontrollierte Betätigung möglich ist.

3. Vorrichtung nach Anspruch 1 oder 2, bei der die primäre Rückhalteeinrichtung ein primärer Schenkel mit schwenkbar miteinander verbundenen ersten und zweiten Schenkelteilen, wobei der erste primäre Schenkelteil abgestützt ist, um eine axiale Bewegung des primären Schenkels zu verhindern, derart dass bei in gerader Position befindlichem primärem Schenkel der primäre Schwimmer durch die gestützte Achse des primären Schenkels zurückgehalten wird, und derart dass beim Verschwenken des primären Schenkels aus der Achse die primäre Schwimmerkraft freigegeben wird.

4. Vorrichtung nach Anspruch 3, bei der der erste und der zweite primäre Schenkelteil derart gelenkig verbunden sind, dass eine Bewegung des ersten und des zweiten primären Schenkelteils nur im wesentlichen innerhalb einer nominellen Ebene möglich ist, und wobei die Gelenkverbindung eine Bewegung des ersten und des zweiten primären Schenkelteils nur zu einer ersten Seite der Achse des primären Schenkels ermöglicht.

5. Vorrichtung nach einem der Ansprüche 1 bis 4, bei der die primäre Rückhalteeinrichtung derart ausgebildet ist, dass sie sich unter Schwerkrafteinwirkung während des Entleerens des Reservoirs wieder gerade richtet.

6. Vorrichtung nach einem der Ansprüche 1 bis 5, bei der die sekundäre Rückhalteeinrichtung durch einen sekundären Schenkel gebildet ist, der schwenkbar miteinander verbundene erste und zweite sekundäre Schenkelteile aufweist, und der erste sekundäre Schenkelteil abgestützt ist, um eine axiale Bewegung des sekundären Schenkels zu verhindern, derart dass bei in gerader Position befindlichem sekundärem Schenkel der sekundäre Schwimmer durch die gestützte Achse des sekundären Schenkels zurückgehalten wird, und derart dass beim Verschwenken des sekundären Schenkels aus der Achse die sekundäre Schwimmerkraft freigegeben wird.

7. Vorrichtung nach Anspruch 6, bei der der erste und der zweite sekundäre Schenkelteil derart gelenkig verbunden sind, dass eine Bewegung des ersten und des zweiten sekundären Schenkelteils nur im wesentlichen innerhalb einer nominellen Ebene möglich ist, und wobei die Gelenkverbindung eine Bewegung des ersten und des zweiten sekundären Schenkelteils nur zu einer ersten Seite der Achse des sekundären Schenkels ermöglicht.

8. Vorrichtung nach einem der Ansprüche 1 bis 7, bei der die sekundäre Rückhalteeinrichtung derart ausgebildet ist, dass sie sich unter Schwerkrafteinwirkung während des Entleerens des Reservoirs wieder gerade richtet.

9. Vorrichtung nach einem der Ansprüche 1 bis 8, mit Teilspülmechanismus, um selektiv ein Gewicht auf das Auslassventil aufzubringen.

10. Verfahren zur ausgelösten Reservoirentleerung mit den folgenden Schritten:
(a) Erzeugen einer primären Schwimmerkraft zum ÖfFnen eines Auslassventils des Reservoirs;
(b) lösbares Zurückhalten der primären Schwimmerkraft, um das Öffnen des Auslassventils zu verhindern;
(c) Erzeugen einer sekundären Schwimmerkraft zum Auslösen der Freigabe des Zurückhaltens der primären Kraft;
(d) lösbares Zurückhalten der sekundären Schwimmerkraft; und
(e) Auslösen der Freigabe des Zurückhaltens der sekundären Kraft.

## Revendications

1. Appareil déclenché pour la décharge d'un réservoir, comprenant:
un flotteur primaire (7) prévu pour la génération d'une force du flotteur primaire pour ouvrir un soupape d'échappement du réservoir; et
un moyen de retenue primaire (9, 10, 14) pour retenir d'une manière desserrable la force du flotteur primaire afin d'empêcher l'ouverture du soupape d'échappement, et un moyen de libération primaire adapté à coopérer avec le moyen de retenue primaire de sorte que le déclenchement du moyen de libération desserre la retenue de la force du flotteur primaire; et
un flotteur secondaire (22) prévu pour la génération d'une force du flotteur secondaire pour déclencher le moyen de libération primaire; et
un moyen de retenue secondaire (18, 19, 20) pour retenir d'une manière desserable la force du flotteur secondaire afin d'empêcher le déclenchement du moyen de libération primaire; et
un moyen de libération secondaire adapté à coopérer avec le moyen de retenue secondaire de sorte que le déclenchement du moyen de libération secondaire desserre le retenue de la force du flotteur secondaire, desserrant en conséquence le retenue de la force du flotteur primaire et déchargeant le réservoir.

2. Appareil selon la revendication 1, dans lequel des moyens sont prévues pour générer la force du flotteur secondaire seulement si le contenu du réservoir surpasse le niveau partiel auquel une opération incontrôlée peut être effectuée.

3. Appareil selon la revendication 1 ou la revendication 2, dans lequel le moyen de retenue primaire est une jambe primaire avec un premier et un second part de la jambe primaire articulés, le premier part de la jambe étant supporté afin d'empêcher le mouvement axial de la jambe primaire de sorte que, avec la jambe primaire dans une position droite, le flotteur primaire est retenu par l'axe supporté de la jambe primaire, et de sorte que la force du flotteur primaire est libérée quand la jambe primaire pivote hors de l'axe.

4. Appareil selon la revendication 3, dans lequel le premier et le second part de la jambe primaire sont articulés d'une manière qu'ils ne permettent qu'un mouvement du premier et du second part de la jambe primaire sensiblement dans un plan nominal, et dans lequel l'articulation ne permet qu'un mouvement du premier part et du second part de la jambe primaire vers une première coté de l'axe de la jambe primaire.

5. Appareil selon une quelconque des revendications 1 à 4, dans lequel le moyen de retenue primaire est agencé de sorte qu'il se redresse sous l'effet de la gravitation pendant la décharge du réservoir.

6. Appareil selon une quelconque des revendications 1 à 5, dans lequel le moyen de retenue secondaire est une jambe secondaire avec un premier et un second part de la jambe secondaire articulés, le premier part de la jambe secondaire étant supporté afin d'empêcher le mouvement axial de la jambe secondaire de sorte que, avec la jambe secondaire dans une position droite, le flotteur secondaire est retenu par l'axe supporté de la jambe secondaire, et de sorte que la force du flotteur secondaire est libérée quand la jambe secondaire pivote hors de l'axe.

7. Appareil selon la revendication 6, dans lequel le premier et le second part de la jambe secondaire sont articulés d'une manière qu'ils ne permettent qu'un mouvement du premier et du second part de la jambe secondaire sensiblement dans un plan nominal, et dans lequel l'articulation ne permet qu'un mouvement du premier part et du second part de la jambe vers une première coté de l'axe de la jambe secondaire.

8. Appareil selon une quelconque des revendications 1 à 7, dans lequel le moyen de retenue secondaire est agencé de sorte qu'il se redresse sous l'effet de la gravitation pendant la décharge du réservoir.

9. Appareil selon une quelconque des revendications 1 à 8 comprenant un mécanisme de chasse d'eau partielle pour sélectivement appliquer du poids au soupape d' échappement.

10. Procédé pour la décharge déclenchée d'un réservoir comprenant les étapes suivantes:
(a) générer une force du flotteur primaire afin d'ouvrir un soupape d'échappement du réservoir;
(b) retenir la force du flotteur primaire d'une manière desserrable afin d'empêcher l'ouverture du soupape d'échappement;
(c) générer une force du flotteur secondaire afin de déclencher la libération de la force primaire;
(d) retenir la force du flotteur secondaire d'une manière desserrable; et
(e) déclencher la libération de la force secondaire.
